(19) Europäisches Patentamt
European Patent Office
Office européen des brevets

(11) **EP 3 086 611 B1**

(12) **EUROPEAN PATENT SPECIFICATION**

(45) Date of publication and mention
of the grant of the patent:
**28.11.2018 Bulletin 2018/48**

(21) Application number: **14871815.8**

(22) Date of filing: **19.06.2014**

(51) Int Cl.:
***H04W 72/12*** *(2009.01)*

(86) International application number:
**PCT/CN2014/080332**

(87) International publication number:
**WO 2015/090022 (25.06.2015 Gazette 2015/25)**

(54) **RESOURCE SCHEDULING METHOD AND DEVICE, AND COMPUTER STORAGE MEDIUM**

RESSOURCENPLANUNGSVERFAHREN UND VORRICHTUNG SOWIE COMPUTERSPEICHERMEDIUM

PROCÉDÉ ET DISPOSITIF D'ORDONNANCEMENT DE RESSOURCES AINSI QUE SUPPORT DE MÉMOIRE D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 CN 201310700217**

(43) Date of publication of application:
**26.10.2016 Bulletin 2016/43**

(73) Proprietor: **ZTE Corporation
Shenzhen, Guangdong 518057 (CN)**

(72) Inventors:
• **SHEN, Jianhua
Shenzhen
Guangdong 518057 (CN)**

• **LIU, Zhen
Shenzhen
Guangdong 518057 (CN)**
• **TAN, Wei
Shenzhen
Guangdong 518057 (CN)**

(74) Representative: **Mozzi, Matteo
Jacobacci & Partners S.p.A.
Via Senato, 8
20121 Milano (IT)**

(56) References cited:
**WO-A1-2007/003707     WO-A1-2012/045517
CN-A- 102 075 944     CN-A- 102 685 907
CN-A- 103 178 990     CN-A- 103 327 582
US-B1- 6 792 273**

## Description

## Technical Field

The present disclosure relates to a wireless communication technology, and in particular to a resource scheduling method and device, and a computer storage medium.

## Background

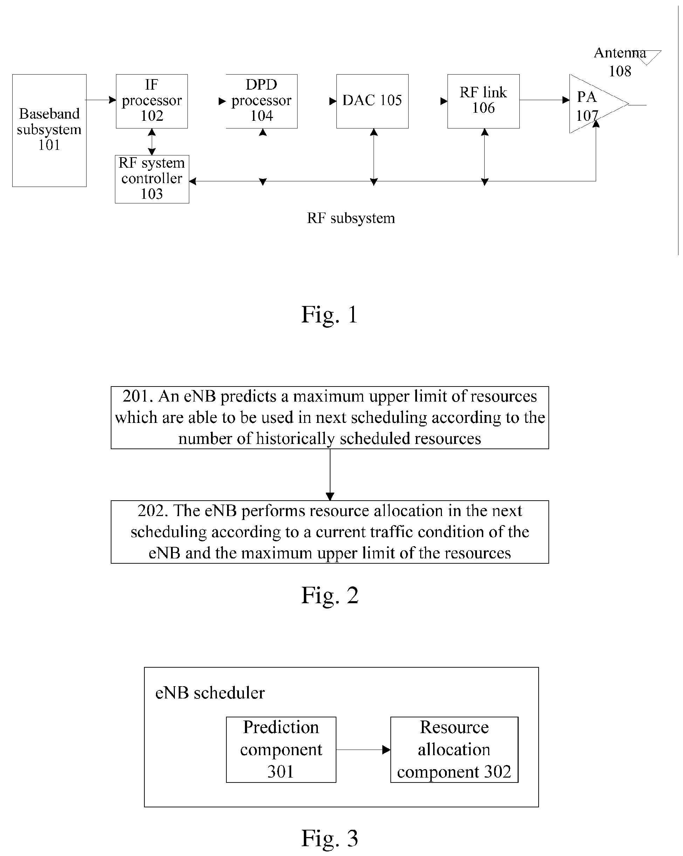

Along with rapid development of mobile communication, Long Term Evolution (LTE) mobile communication technologies have drawn more and more attentions of the communication industry. The structure of a downlink of an LTE evolved Node B (eNB) system is shown in Fig. 1. In the system, a baseband subsystem 101 performs processing, such as scheduling and modulation, on data from a core network; an intermediate-frequency processor 102 performs processing, such as filtering and up-conversion, on a received digital signal of the baseband subsystem 101; a Digital Predistortion (DPD) processor 104 performs peak clipping and DPD processing on the received digital signal converted by the intermediate-frequency processor 102; a Digital-to-Analog Converter (DAC) 105 performs digital-to-analog conversion on the digital signal; a radio frequency link 106 performs analog frequency conversion on an analog signal; a Power Amplifier (PA) 107 performs power amplification on the analog radio frequency signal; an antenna 108 sends the amplified analog signal; and a radio frequency system controller 103 controls each unit of the radio frequency system.

The PA, among various components in the eNB equipment of a communication system, is a component with higher power consumption, and reducing power consumption of the PA and improving efficiency of the PA is one of effective means for improving efficiency of the LTE eNB system. The PA in the related art adopts a constant bias voltage. In order to reduce power consumption of the PA, the bias voltage of the PA may also be dynamically regulated according to practical output power, so that normal operation of the system is ensured, the power consumption of the PA is reduced, and efficiency of the LTE eNB system is improved.

An optimal energy saving can theoretically be achieved by regulating a bias voltage of a PA according to power of each Orthogonal Frequency Division Multiplexing (OFDM) symbol. However, symbol-level regulation has very high requirements on both regulation speed of a Radio Remote Unit (RRU) power component and processing capability of the DPD, and most of power components and DPDs are not able to meet the requirements, therefore, the bias voltage of the PA is usually regulated in a manner of symbol power detection and radio frame-level regulation.

For the characteristic of intensive time-domain fluctuation of an LTE baseband signal, the manner of symbol power detection and radio frame-level regulation is usually implemented as follows: fast power calculation is performed by taking a time length of one OFDM symbol as a period, so as to acquire corresponding power; maximum symbol power within a query time period is statistically obtained according to set query time; a power level is acquired according to the maximum symbol power within the query time period; a bias voltage of the PA is mapped according to the acquired power level; and voltage regulation information is generated according to the mapped bias voltage of the PA, and the voltage regulation information is sent to a power component to regulate the bias voltage of the PA.

An LTE system with a system bandwidth of 20MHz includes totally 100 Resource Blocks (RBs). When 110 RBs are required to be occupied by downlink services, a scheduling manner for some systems is as follows: 100 RBs are allocated in a previous Transmission Time Interval (TTI), and 10 RBs are allocated in the next TTI. When this scheduling manner is adopted, symbol power during use of 100 RBs is much higher than symbol power during use of 10 RBs. If excessive RBs are allocated in one time within a time length (10ms) of one radio frame while few RBs are allocated in the other 9 times, there would be a burst of OFDM symbol power within a very short time, but average symbol power within the time length is not high. Under such a condition, when the manner of symbol power detection and radio frame-level regulation is adopted to regulate the bias voltage of the PA, the burst of OFDM symbol power may reduce a regulation range of the bias voltage of the PA and even cause the problem of incapability in regulating the bias voltage of the PA.

WO 2012/045517 A1 relates to optimizing power consumption of a base station in a mobile communication network.

## Summary

In order to solve the technical problem in the related art, the embodiments of the present disclosure mainly provide a resource scheduling method and device, and a computer storage medium.

The object of the present invention is achieved by the features of the appended independent claims.

The embodiments of the present disclosure provide the resource scheduling method and device, and the computer storage medium. The eNB predicts the maximum upper limit of the resources which are able to be used in the next scheduling according to the number of historically scheduled resources, and performs, in the next scheduling, resource allocation according to the current traffic condition of the eNB and the maximum upper limit of the resources. In this way, the number of historically scheduled resources can be taken for reference in the next scheduling, the condition that average power is low but high OFDM symbol power exists may be prevented when a manner of symbol power detection and radio frame-level regulation is adopted to regulate a bias voltage of a PA, the problems of small regulation range of the bias voltage of the PA and even incapability in regulating the bias voltage of the PA are solved, power consumption of the PA is reduced, and efficiency of the PA is improved.

**Brief Description of the Drawings**

Fig. 1 is a structure diagram of a downlink of an LTE eNB system in a related art;
Fig. 2 is a flowchart of a resource scheduling method according to an embodiment of the present disclosure; and
Fig. 3 is a structure diagram of a resource scheduling device according to an embodiment of the present disclosure.

**Detailed Description of the Embodiments**

In the embodiments of the present disclosure, an eNB predicts a maximum upper limit of resources which are able to be used in the next scheduling according to the number of historically scheduled resources, and performs, in the next scheduling, resource allocation according to a current traffic condition of the eNB and the maximum upper limit of the resources.

The present disclosure will be further described below with reference to the drawings and specific embodiments in detail.

An embodiment of the present disclosure provides a resource scheduling method, and as shown in Fig. 2, the method includes the following steps.

Step 201: an eNB predicts a maximum upper limit of resources which are able to be used in next scheduling according to the number of historically scheduled resources.

As an exemplary embodiment, the eNB acquires a length of a time window and a prediction method which are input by a user, and predicts the maximum upper limit of the resources which are able to be used in the next scheduling according to the prediction method and the number of historically scheduled resources within the time window.

The eNB may acquire the length of the time window and the prediction method which are input by the user in a manner as follows: the eNB acquires the length of the time window input by the user from a textbox of a network manager, and acquires the prediction method input by the user from an option list of the network manager.

The time window may include: a long time window and/or a short time window.

As an exemplary implementation, a length of the short time window may be equal to M TTIs, and M is a positive integer; and a length of the long time window may be N times the length of the short time window, and N is a positive integer.

The prediction method may include: a moving average method, and/or a trend average method, and/or a weighted average method, and/or an exponential smoothing method.

As an exemplary implementation, corresponding prediction methods may be selected according to long-term changing conditions of the number of historically scheduled resources of different regions. For example, when the number of historically scheduled resources of one region is greatly changed, the weighted average method may be adopted, so that during prediction, a weight of the number of historically scheduled resources closer to the next scheduling is larger, and a weight of the number of historically scheduled resources farer from the next scheduling is smaller.

The operation that the eNB predicts the maximum upper limit of the resources which are able to be used in the next scheduling according to the prediction method and the number of historically scheduled resources within the time window may specifically be implemented as follows:

the eNB predicts the number of scheduled resources within the short time window according to the prediction method and the number of historically scheduled resources within the short time window, predicts the number of scheduled resources within the long time window according to the predicted number of scheduled resources within the short time window, and predicts the maximum upper limit of the resources which are able to be used in the next scheduling according to the predicted number of scheduled resources within the short time window, the predicted number of scheduled resources within the long time window, the number of resources in a full bandwidth and a resource compensation.

As an exemplary implementation, the number of historically scheduled resources may be: the number of most-recently scheduled resources within the time window.

When the number of scheduled resources within the long time window is predicted according to the number of scheduled resources within the short time window, the number of scheduled resources within the short time window may be: a latest predicted number of scheduled resources within the short time window.

When the prediction method is the moving average method, the operation that the eNB predicts the number of scheduled resources within the short time window according to the prediction method and the number of historically scheduled resources within the short time window may be specifically implemented as follows:

when scheduling time T is shorter than the length T1 of the short time length, the number of scheduled resources within the short time window is predicted to be the number of resources in the full bandwidth; when the scheduling time T is longer than or equal to the length T1 of the short time window, the number $MS(T1)$ of scheduled resources within the short time window is predicted to be:

$$MS(T1) = \frac{\sum_{t=1}^{T1} SS(t)}{T1},$$

where: T1 represents the length of the short time window; and $SS(t)$ represents the number of practically scheduled resources in the tth historical scheduling period, when t=1, $SS(1)$ represents the number of practically scheduled resources in previous scheduling if the numbers of scheduled resources of respective TTIs are accumulated from right to left of the short time window, and when t=T1, $SS(T1)$ represents the number of practically scheduled resources in previous scheduling if the numbers of scheduled resources of respective TTIs are accumulated from left to right of the short time window.

Here, the resources usually refer to RB resources; the scheduling time represents the number of scheduling times, and is continuously accumulated along with scheduling; and the number of resources in the full bandwidth is the number of resources in a system bandwidth, and for example, when the system bandwidth is 20MHz, the number of resources in the full bandwidth is 100 RBs.

When the prediction method is the moving average method, the operation that the eNB predicts the number of scheduled resources within the long time window according to the number of scheduled resources within the short time window may be specifically implemented as follows:

when the scheduling time T is shorter than the length T1 of the short time window, the number of scheduled resources within the long time window is predicted to be the number of resources in the full bandwidth; when the scheduling time T is longer than or equal to the length T1 of the short time length and shorter than the length T2 of the long time window, the number $ML(T2)$ of scheduled resources in the long time window is predicted to be:

$$ML(T2) = \left(\sum_{k=1}^{M} MS(T_k)\right) \Big/ M,$$

where: $MS(T_k)$ represents the number of scheduled resources predicted in the kth time within the short time window, when k=1, $MS(T_1)$ represents a latest predicted number of scheduled resources within the short time window if it is defined that the first time of prediction is prediction M according to a prediction sequence, and when k=M, $MS(T_M)$ represents the latest predicted number of scheduled resources within the short time window if it is defined that the first time of prediction is prediction 1 according to a prediction sequence; M represents an integer part of a quotient obtained by dividing the length T1 of the short time window by the scheduling time T; and

when the scheduling time T is longer than or equal to the length T2 of the long time window, the number $ML(T2)$ of scheduled resources in the long time window is predicted to be:

$$ML(T2) = \left(\sum_{k=1}^{T2 \div T1} MS(T_k)\right) \Big/ (T2 \div T1),$$

where: $MS(T_k)$ represents the number of scheduled resources predicted in the kth time within the short time window, when k=1, $MS(T_1)$ represents the latest predicted number of scheduled resources within the short time window if it is defined that the first prediction is prediction $T2 \div T1$ according to the prediction sequence, and when $k=T2 \div T1$, $MS(T_{T2 \div T1})$ represents the latest predicted number of scheduled resources within the short time window if it is defined that the first time of prediction is prediction 1 according to the prediction sequence.

When the prediction method is the weighted average method, the operation that the eNB predicts the number of scheduled resources within the short time window according to the prediction method and the number of historically scheduled resources within the short time window may be specifically implemented as follows:

when the scheduling time T is shorter than the length T1 of the short time length, the number of scheduled resources within the short time window is predicted to be the number of resources in the full bandwidth; when the scheduling time T is longer than or equal to the length T1 of the short time window, the number $MS(T1)$ of scheduled resources within the short time window is predicted to be:

$$MS(T1) = \frac{\sum_{t=1}^{T1} SS(t) \times KS(t)}{\sum_{t=1}^{T1} KS(t)},$$

where: T1 represents the length of the short time window, $SS(t)$ represents the number of practically scheduled resources in the tth historical scheduling period, and $KS(t)$ represents a weight of the number of practically scheduled resources in the tth historical scheduling period; when t=1, $SS(1)$ represents the number of practically scheduled resources in previous scheduling if the numbers of scheduled resources of respective TTIs are accumulated from right to left of the short time window, and when t=T1, $SS(T1)$ represents the number of practically scheduled resources in previous scheduling if the numbers of scheduled resources of respective TTIs are accumulated from left to right of the short time window.

By the formula, it could be achieved that a weight of the number of historically scheduled resources closer to next scheduling is larger, and a weight of the number of historically scheduled resources farer from next scheduling is smaller.

When the prediction method is the weighted average method, the operation that the eNB predicts the number of scheduled resources within the long time window according to the number of scheduled resources within the short time window may be specifically implemented as follows:

when the scheduling time T is shorter than the length T1 of the short time window, the number of scheduled resources within the long time window is predicted to be the number of resources in the full bandwidth; when the scheduling time T is longer than or equal to the length T1 of the short time length and shorter than the length T2 of the long time window, the number $ML(T2)$ of scheduled resources in the long time window is predicted to be:

$$ML(T2) = \frac{\sum_{k=1}^{M}(MS(T_k) \times KL(k))}{\sum_{k=1}^{M}KL(k)},$$

where: $MS(T_k)$ represents the number of scheduled resources predicted in the kth time within the short time window, and $KL(k)$ represents a weight of the number of scheduled resources predicted in the kth time within the short time window; when k=1, $MS(T_1)$ represents the latest predicted number of scheduled resources within the short time window and $KL(1)$ represents a weight of the latest predicted number of scheduled resources within the short time window if it is defined that the first prediction is prediction M according to the prediction sequence, and when k=M, $MS(T_M)$ represents the latest predicted number of scheduled resources within the short time window and $KL(M)$ represents the weight of the latest predicted number of scheduled resources within the short time window if it is defined that the first prediction is prediction 1 according to the prediction sequence; M represents the integer part of the quotient obtained by dividing the length T1 of the short time window by the scheduling time T; and

when the scheduling time T is longer than or equal to the length T2 of the long time window, the number $ML(T2)$ of scheduled resources in the long time window is predicted to be:

$$ML(T2) = \frac{\sum_{k=1}^{T2 \div T1}(MS(T_k) \times KL(k))}{\sum_{k=1}^{T2 \div T1}KL(k)},$$

where: $MS(T_k)$ represents the number of scheduled resources predicted in the kth time within the short time window, and $KL(k)$ represents the weight of the number of scheduled resources predicted in the kth time within the short time window; when k=1, $MS(T_1)$ represents the latest predicted number of scheduled resources within the short time window and $KL(1)$ represents the weight of the latest predicted number of scheduled resources within the short time window if it is defined that the first prediction is prediction $T2 \div T1$ according to the prediction sequence, and when k=T2÷T1, $MS(T_{T2 \div T1})$ represents the latest predicted number of scheduled resources within the short time window and $KL(T2 \div T1)$ represents the weight of the latest predicted number of scheduled resources within the short time window if it is defined that the first time of prediction is prediction 1 according to the prediction sequence.

The operation that the eNB predicts the maximum upper limit of the resources which are able to be used in the next scheduling according to the predicted number of scheduled resources within the short time window, the predicted number of scheduled resources within the long time window, the number of resources in the full bandwidth and the resource compensation may be specifically implemented as follows:

when the predicted number of scheduled resources within the long time window is longer than or equal to the predicted number of scheduled resources within the short time window, the maximum upper limit $RB\_E$ of the resources which are able to be used in the next scheduling is predicted to be:

$$RB\_E = \min\ (ML(T2) + \triangle RB,\ RB_{ALL}),$$

where: $ML(T2)$ represents the predicted number of scheduled resources within the long time window; $RB_{ALL}$ represents the number of resources in the full bandwidth; $\triangle RB$ represents the resource compensation;

when the predicted number of scheduled resources within the long time window is smaller than the predicted number of scheduled resources within the short time window, the maximum upper limit $RB\_E$ of the resources which are able to be used in the next scheduling is predicted to be:

$$RB\_E = \min \; (MS(T1) + \triangle RB, \; RB_{ALL}),$$

where: $MS(T1)$ represents the predicted number of scheduled resources within the short time window; $RB_{ALL}$ represents the number of resources in the full bandwidth; and $\triangle RB$ represents the resource compensation.

As an exemplary implementation, the resource compensation may be determined by acquiring input of the user, and moreover, the resource compensation may be dynamically regulated according to the predicted number of scheduled resources within the short time window and the number of practically scheduled resources within a corresponding scheduling period, specifically as follows:
before the number of scheduled resources within the short time window is predicted, a predicted difference within the short time window is obtained according to a stored previous predicted number of scheduled resources within the short time window and the number of practically scheduled resources in the corresponding scheduling period, and the resource compensation is regulated according to the predicted difference within the short time window.

The corresponding scheduling period represents a scheduling period where the short time window is located, and for example, a previous scheduled short time window corresponds to a previous scheduling period.

The predicted difference $\triangle RBL$ obtained according to the stored previous predicted number of scheduled resources within the short time window and the number of practically scheduled resources in the corresponding scheduling period within the short time window may be:

$$\triangle RBL = \frac{\sum\limits_{k=1}^{T1} |MS(T_k) - SS(k)|}{T1},$$

where: T1 represents the length of the short time window; $MS(T_k)$ represents the number of scheduled resources predicted in the kth time within the short time window, and $SS(k)$ represents the number of practically scheduled resources in the kth historical scheduling period; and when k=1, $MS(T_1)$ represents the latest predicted number of scheduled resources within the short time window and $SS(1)$ represents the number of practically scheduled resources in previous scheduling if the first prediction is T1 according to the prediction sequence, and when k=T1, $MS(T_{T1})$ represents the latest predicted number of scheduled resources within the short time window and $SS(T1)$ represents the number of practically scheduled resources in previous scheduling if the first time of prediction is prediction 1 according to the prediction sequence.

The operation that the resource compensation is regulated according to the predicted difference within the short time window may be implemented as follows: when the predicted difference within the short time window is more than a preset value, the resource compensation is reduced by a preset step length; and when the predicted difference within the short time window is smaller than the preset value, the resource compensation is increased by the preset step length.

As an exemplary implementation, the preset value and the preset step length may be determined by input of the user.

For example, if the preset value is 4, the preset step length is 1 and the predicted difference within the short time window is 8, the resource compensation is reduced by 1; and

for example, if the preset value is 2, the preset step length is 1 and the predicted difference within the short time window is 1, the resource compensation is increased by 1.

Step 202: resource allocation is performed in the next scheduling according to a current traffic condition of the eNB and the maximum upper limit of the resources.

As an exemplary embodiment, resource number allocation and resource location allocation are performed in the next scheduling according to the current traffic condition of the eNB and the maximum upper limit of the resources.

The current traffic condition is a downlink scheduling waiting state of each piece of User Equipment (UE) subjected to priority ranking.

Performing resource number allocation according to the current traffic condition of the eNB and the maximum upper limit of the resources may be implemented according to the related art, and the number of available resources in the system bandwidth is replaced with the maximum upper limit, predicted in Step 201, of the resources which may be used in the embodiment of the present disclosure.

Resource location allocation may be implemented as follows: the eNB maps an allocated virtual resource to a practical physical resource location in a mapping manner.

As an exemplary implementation, the mapping manner may include: a distributed manner and/or a centralized manner.

In order to implement the abovementioned method, the embodiment of the present disclosure further provides a resource scheduling device, and as shown in Fig. 3, the device may be located in an eNB scheduler and may include: a prediction component 301 and a resource allocation component 302, wherein

the prediction component 301 is configured to predict a maximum upper limit of resources which are able to be used in next scheduling according to the number of historically scheduled resources; and

the resource allocation component 302 is configured to perform, in the next scheduling, resource allocation according to a current traffic condition of an eNB and the maximum upper limit of the resources.

The prediction component 301 is specifically configured to acquire a length of a time window and a prediction method which are input by a user, and predict the maximum upper limit of the resources which are able to be used in the next scheduling according to the prediction method and the number of historically scheduled resources within the time window.

The prediction component 301 may be configured to acquire the length of the time window input by the user from a textbox, and acquire the prediction method input by the user from an option list.

The time window may include: a long time window and/or a short time window.

As an exemplary implementation, a length of the short time window may be equal to M TTIs, and M is a positive integer; and a length of the long time window may be N times the length of the short time window, and N is a positive integer.

The prediction method may include: a moving average method, and/or a trend average method, and/or a weighted average method, and/or an exponential smoothing method.

As an exemplary implementation, corresponding prediction methods may be selected according to long-term changing conditions of the number of historically scheduled resources of different regions. For example, when the number of historically scheduled resources of one region is greatly changed, the weighted average method may be adopted, so that during prediction, a weight of the number of historically scheduled resources closer to next scheduling is larger, and a weight of the number of historically scheduled resources farer from next scheduling is smaller.

The prediction component 301 may specifically be configured to: predict the number of scheduled resources within the short time window according to the prediction method and the number of historically scheduled resources within the short time window, predict the number of scheduled resources within the long time window according to the predicted number of scheduled resources within the short time window, and predict the maximum upper limit of the resources which are able to be used in the next scheduling according to the predicted number of scheduled resources within the short time window, the predicted number of scheduled resources within the long time window, the number of resources in a full bandwidth and a resource compensation.

As an exemplary implementation, the number of historically scheduled resources may be: the number of most-recently scheduled resources within the time window.

When the number of scheduled resources within the long time window is predicted according to the number of scheduled resources within the short time window, the number of scheduled resources within the short time window may be: a latest predicted number of scheduled resources within the short time window.

When the prediction method is the moving average method, the prediction component 301 is specifically configured to:

when scheduling time T is shorter than the length T1 of the short time length, predict the number of scheduled resources within the short time window to be the number of resources in the full bandwidth;
when the scheduling time T is longer than or equal to the length T1 of the short time window, predict the number $MS(T1)$ of scheduled resources within the short time window to be:

$$MS(T1) = \frac{\sum_{t=1}^{T1} SS(t)}{T1},$$

where: T1 represents the length of the short time window; and $SS(t)$ represents the number of practically scheduled resources in the tth historical scheduling period, when t=1, $SS(1)$ represents the number of practically scheduled resources in previous scheduling if the numbers of scheduled resources of respective TTIs are accumulated from right to left of the short time window, and when t=T1, $SS(T1)$ represents the number of practically scheduled resources in previous scheduling if the numbers of scheduled resources of respective TTIs are accumulated from left to right of the short time window.

Here, the resources usually refer to RB resources; the scheduling time represents the number of scheduling times, and is continuously accumulated along with scheduling; and the number of resources in the full bandwidth is the number of resources in a system bandwidth, and for example, when the system bandwidth is 20MHz, the number of resources in the full bandwidth is 100 RBs.

When the prediction method is the moving average method, the prediction component 301 is specifically configured to:

when the scheduling time T is shorter than the length T1 of the short time window, predict the number of scheduled resources within the long time window to be the number of resources in the full bandwidth;
when the scheduling time T is longer than or equal to the length T1 of the short time length and shorter than the length T2 of the long time window, predict the number $ML(T2)$ of scheduled resources in the long time window to be:

$$ML(T2) = (\sum_{k=1}^{M} MS(T_k)) \Big/ M \; ,$$

where: $MS(T_k)$ represents the number of scheduled resources predicted in the kth time within the short time window, when k=1, $MS(T_1)$ represents a latest predicted number of scheduled resources within the short time window if it is defined that the first time of prediction is prediction M according to a prediction sequence, and when k=M, $MS(T_M)$ represents the latest predicted number of scheduled resources within the short time window if it is defined that the first time of prediction is prediction 1 according to a prediction sequence; M represents an integer part of a quotient obtained by dividing the length T1 of the short time window by the scheduling time T; and

when the scheduling time T is longer than or equal to the length T2 of the long time window, predict the number $ML(T2)$ of scheduled resources in the long time window to be:

$$ML(T2) = (\sum_{k=1}^{T2 \div T1} MS(T_k)) \Big/ (T2 \div T1) \; ,$$

where: $MS(T_k)$ represents the number of scheduled resources predicted in the kth time within the short time window, when k=1, $MS(T_1)$ represents the latest predicted number of scheduled resources within the short time window if it is defined that the first prediction is prediction $T2 \div T1$ according to the prediction sequence, and when k=T2÷T1, $MS(T_{T2 \div T1})$ represents the latest predicted number of scheduled resources within the short time window if it is defined that the first time of prediction is prediction 1 according to the prediction sequence.

When the prediction method is the weighted average method, the prediction component 301 is specifically configured to:

when the scheduling time T is shorter than the length T1 of the short time length, predict the number of scheduled resources within the short time window to be the number of resources in the full bandwidth; when the scheduling time T is longer than or equal to the length T1 of the short time window, predict the number $MS(T1)$ of scheduled resources within the short time window to be:

$$MS(T1) = \frac{\sum_{t=1}^{T1}(SS(t) \times KS(t))}{\sum_{t=1}^{T1} KS(t)} \; ,$$

where: T1 represents the length of the short time window, $SS(t)$ represents the number of practically scheduled resources in the tth historical scheduling period, and $KS(t)$ represents a weight of the number of practically scheduled resources in the tth historical scheduling period; and when t=1, $SS(1)$ represents the number of practically scheduled resources in previous scheduling if the numbers of scheduled resources of respective TTIs are accumulated from right to left of the short time window, and when t=T1, $SS(T1)$ represents the number of practically scheduled resources in previous scheduling if the numbers of scheduled resources of respective TTIs are accumulated from left to right of the short time window.

By the formula, it could be achieved that a weight of the number of historically scheduled resources closer to next scheduling is larger, and a weight of the number of historically scheduled resources farer from next scheduling is smaller.

When the prediction method is the weighted average method, the prediction component 301 is specifically configured to:

when the scheduling time T is shorter than the length T1 of the short time window, predict the number of scheduled resources within the long time window to be the number of resources in the full bandwidth; when the scheduling time T is longer than or equal to the length T1 of the short time length and shorter than the length T2 of the long time window, predict the number $ML(T2)$ of scheduled resources in the long time window to be:

$$ML(T2) = \frac{\sum_{k=1}^{M}(MS(T_k) \times KL(k))}{\sum_{k=1}^{M} KL(k)} \; ,$$

where: $MS(T_k)$ represents the number of scheduled resources predicted in the kth time within the short time window, and $KL(k)$ represents a weight of the number of scheduled resources predicted in the kth time within the short time window; when k=1, $MS(T_1)$ represents the latest predicted number of scheduled resources within the short time window and $KL(1)$ represents a weight of the latest predicted number of scheduled resources within the short time window if it is defined that the first prediction is prediction M according to the prediction sequence, and when k=M, $MS(T_M)$ represents the latest predicted number of scheduled resources within the short time window and $KL(M)$ represents the weight of the latest predicted number of scheduled resources within the short time window if it is defined that the first time of prediction is prediction 1 according to the prediction sequence; M represents the integer part of the quotient obtained by dividing the length T1 of the short time window by the scheduling time T; and

when the scheduling time T is longer than or equal to the length T2 of the long time window, predict the number $ML(T2)$ of scheduled resources in the long time window to be:

$$ML(T2) = \frac{\sum_{k=1}^{T2 \div T1}(MS(T_k) \times KL(k))}{\sum_{k=1}^{T2 \div T1} KL(k)},$$

where: $MS(T_k)$ represents the number of scheduled resources predicted in the kth time within the short time window, and $KL(k)$ represents the weight of the number of scheduled resources predicted in the kth time within the short time window; when k=1, $MS(T_1)$ represents the latest predicted number of scheduled resources within the short time window and $KL(1)$ represents the weight of the latest predicted number of scheduled resources within the short time window if it is defined that the first prediction is prediction $T2 \div T1$ according to the prediction sequence, and when k=T2÷T1, $MS(T_{T2 \div T1})$ represents the latest predicted number of scheduled resources within the short time window and $KL(T2 \div T1)$ represents the weight of the latest predicted number of scheduled resources within the short time window if it is defined that the first time of prediction is prediction 1 according to the prediction sequence.

The prediction component 301 is further specifically configured to:
when the predicted number of scheduled resources within the long time window is longer than or equal to the predicted number of scheduled resources within the short time window, predict the maximum upper limit $RB\_E$ of the resources which are able to be used in the next scheduling to be:

$$RB\_E = \min\ (ML(T2) + \triangle RB,\ RB_{ALL}),$$

where: $ML(T2)$ represents the predicted number of scheduled resources within the long time window; $RB_{ALL}$ represents the number of resources in the full bandwidth; $\triangle RB$ represents the resource compensation;

when the predicted number of scheduled resources within the long time window is smaller than the predicted number of scheduled resources within the short time window, predict the maximum upper limit $RB\_E$ of the resources which are able to be used in the next scheduling to be:

$$RB\_E = \min\ (MS(T1) + \triangle RB,\ RB_{ALL}),$$

where: $MS(T1)$ represents the predicted number of scheduled resources within the short time window; $RB_{ALL}$ represents the number of resources in the full bandwidth; and $\triangle RB$ represents the resource compensation.

As an exemplary implementation, the resource compensation is determined by acquiring input of the user; and
the prediction component 301 is further specifically configured to dynamically regulate the resource compensation according to the predicted number of scheduled resources within the short time window and the number of practically scheduled resources within a corresponding scheduling period, specifically by: before the number of scheduled resources within the short time window is predicted, obtaining a predicted difference within the short time window according to a stored previous predicted number of scheduled resources within the short time window and the number of practically scheduled resources in the corresponding scheduling period, and regulating the resource compensation according to the predicted difference within the short time window.

The corresponding scheduling period represents a scheduling period where the short time window is located, and for example, a previous scheduled short time window corresponds to a previous scheduling period.

The predicted difference $\triangle RBL$ obtained according to the stored previous predicted number of scheduled resources within the short time window and the number of practically scheduled resources in the corresponding scheduling period within the short time window may be:

$$\triangle RBL = \frac{\sum_{k=1}^{T1}|MS(T_k) - SS(k)|}{T1},$$

where: T1 represents the length of the short time window; $MS(T_k)$ represents the number of scheduled resources predicted in the kth time within the short time window, and $SS(k)$ represents the number of practically scheduled resources in the kth historical scheduling period; and when k=1, $MS(T_1)$ represents the latest predicted number of scheduled resources within the short time window and $SS(1)$ represents the number of practically scheduled resources in previous scheduling if the first prediction is T1 according to the prediction sequence, and when k=T1, $MS(T_{T1})$ represents the latest predicted number of scheduled resources within the short time window and $SS(T1)$ represents the number of practically scheduled resources in previous scheduling if the first time of prediction is prediction 1 according to the prediction sequence.

The operation that the resource compensation is regulated according to the predicted difference within the short time window may be implemented as follows: when the predicted difference within the short time window is more than a preset value, the resource compensation is reduced by a preset step length; and when the predicted difference within the short time window is smaller than the preset value, the resource compensation is increased by the preset step length.

As an exemplary implementation, the preset value and the preset step length may be determined by input of the user.

For example, if the preset value is 4, the preset step length is 1 and the predicted difference within the short time window is 8, the resource compensation is reduced by 1; and

for example, if the preset value is 2, the preset step length is 1 and the predicted difference within the short time window is 1, the resource compensation is increased by 1.

The resource allocation component 302 is specifically configured to perform, in the next scheduling, resource number allocation and resource location allocation according to the current traffic condition of the eNB and the maximum upper limit of the resources.

The current traffic condition is a downlink scheduling waiting state of each piece of UE subjected to priority ranking.

Performing resource number allocation according to the current traffic condition of the eNB and the maximum upper limit of the resources may be implemented according to the related art, and the number of available resources in the system bandwidth is replaced with the maximum upper limit, predicted in Step 301, of the resources which may be used in the embodiment of the present disclosure.

The resource allocation component 302 is specifically configured to map an allocated virtual resource to a practical physical resource location in a mapping manner.

As an exemplary implementation, the mapping manner may include: a distributed manner and/or a centralized manner.

The prediction component 301 may be implemented by a Central Processing Unit (CPU) and memory in the eNB scheduler, and the resource allocation component 302 may be implemented by the CPU and scheduling interface of the eNB scheduler.

When being implemented in form of software function component and sold or used as an independent product, the resource scheduling method of the embodiments of the present disclosure may also be stored in a computer-readable storage medium. Based on such understanding, those skilled in the art should know that the embodiments of the present disclosure may be provided as a method, a system or a computer program product. Therefore, the embodiments of the present disclosure may adopt a form of pure hardware embodiment, pure software embodiment or combined software and hardware embodiment. Moreover, the embodiments of the present disclosure may adopt a form of computer program product implemented on one or more computer-available storage media including computer-available program codes, the storage media including, but not limited to, a U disk, a mobile hard disk, a Read-Only Memory (ROM), a disk memory, a Compact Disc Read-Only Memory (CD-ROM), an optical memory and the like.

The embodiments of the present disclosure are described with reference to flowcharts and/or block diagrams of the method, device and computer program product according to the embodiments of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

Correspondingly, the embodiment of the present disclosure further provides a computer storage medium, in which a computer program is stored, the computer program being configured to execute a resource scheduling method of the embodiment of the present disclosure.

The above is only the exemplary embodiment of the present disclosure and not intended to limit the scope of protection defined by the appended claims of the present disclosure.

**Industrial Applicability**

According to the embodiment, the eNB may refer to the number of historically scheduled resources in the next scheduling, so that the condition that average power is low but high OFDM symbol power exists may be prevented when a manner of symbol power detection and radio frame-level regulation is adopted to regulate a bias voltage of a PA, the problems of small regulation range of the bias voltage of the PA and even incapability in regulating the bias voltage of the PA are solved, power consumption of the PA is reduced, and efficiency of the PA is improved.

**Claims**

1. A resource scheduling method, comprising:

   predicting (201), by an evolved Node B, eNB, a number of scheduled resources within a short time window according to a prediction method and a number of most-recently scheduled resources within the short time window;
   predicting, by the eNB, the number of scheduled resources within a long time window according to the predicted number of scheduled resources within the short time window;
   predicting, by the eNB, a maximum upper limit of resources which are able to be used in next scheduling according to the predicted number of scheduled resources within the short time window, the predicted number of scheduled resources within the long time window, a number of resources in a full bandwidth and a resource compensation, and
   performing (202), in the next scheduling, resource allocation according to a current traffic condition of the eNB and the maximum upper limit of the resources,
   wherein a length of the time window and the prediction method are input by a user and are acquired by the eNB.

2. The method as claimed in claim 1, wherein the prediction method comprises:

a moving average method, and/or a trend average method, and/or a weighted average method, and/or an exponential smoothing method.

3. The method as claimed in claim 1, wherein the resource compensation is dynamically regulated according to the predicted number of scheduled resources within the short time window and the number of practically scheduled resources within a corresponding scheduling period.

4. A resource scheduling device, comprising: a prediction component (301) and a resource allocation component (302), wherein
the prediction component (301) is configured to:

   predict a number of scheduled resources within a short time window according to a prediction method and a number of most-recently scheduled resources within the short time window;
   predict the number of scheduled resources within a long time window according to the predicted number of scheduled resources within the short time window;
   predict a maximum upper limit of resources which are able to be used in the next scheduling according to the predicted number of scheduled resources within the short time window, the predicted number of scheduled resources within the long time window, a number of resources in a full bandwidth and a resource compensation; and
   the resource allocation component (302) is configured to perform, in the next scheduling, resource allocation according to a current traffic condition of an evolved Node B, eNB, and the maximum upper limit of the resources,
   wherein a length of the time window and the prediction method are input by a user and are acquired by the eNB.

5. The device as claimed in claim 4, wherein the prediction method comprises: a moving average method, and/or a trend average method, and/or a weighted average method, and/or an exponential smoothing method.

6. The device as claimed in claim 4, wherein the prediction component (301) is further configured to dynamically regulate the resource compensation according to the predicted number of scheduled resources within the short time window and the number of practically scheduled resources within a corresponding scheduling period.

7. A computer storage medium, in which a computer program is stored, the computer program being configured to execute the resource scheduling method as claimed in any one of claims 1 to 3.

**Patentansprüche**

1. Ressourcenplanungsverfahren, umfassend:

    Vorhersagen (201) durch einen Evolved-Node B (eNB) einer Anzahl von geplanten Ressourcen innerhalb eines kurzen Zeitfensters gemäß einem Vorhersageverfahren und einer Anzahl von zuletzt geplanten Ressourcen innerhalb des kurzen Zeitfensters;
    Vorhersagen der Anzahl geplanter Ressourcen innerhalb eines langen Zeitfensters durch den eNB gemäß der vorhergesagten Anzahl von geplanten Ressourcen innerhalb des kurzen Zeitfensters;
    Vorhersagen durch den eNB einer maximalen Obergrenze von Ressourcen, die in der nächsten Planung verwendet werden können, gemäß der vorhergesagten Anzahl von geplanten Ressourcen innerhalb des kurzen Zeitfensters, der vorhergesagten Anzahl von geplanten Ressourcen innerhalb des langen Zeitfensters, einer Anzahl von Ressourcen in voller Bandbreite und einer Ressourcenkompensation, und
    Durchführen (202) der Ressourcenzuweisung in der nächsten Planung gemäß einer aktuellen Verkehrsbedingung des eNB und der maximalen Obergrenze der Ressourcen,
    wobei eine Länge des Zeitfensters und das Vorhersageverfahren durch einen Benutzer eingegeben und durch den eNB erfasst werden.

2. Verfahren nach Anspruch 1, wobei das Vorhersageverfahren Folgendes umfasst: ein Gleitender-Mittelwert-Verfahren und/oder ein Trendmittelwertverfahren und/oder ein Gewichteter-Mittelwert-Verfahren und/oder ein Exponentielle-Glättung-Verfahren.

3. Verfahren nach Anspruch 1, wobei die Ressourcenkompensation gemäß der vorhergesagten Anzahl von geplanten Ressourcen innerhalb des kurzen Zeitfensters und der Anzahl von praktisch geplanten Ressourcen innerhalb einer entsprechenden Planungsperiode dynamisch gesteuert wird.

4. Ressourcenplanungsvorrichtung, umfassend: eine Vorhersagekomponente (301) und eine Ressourcenzuteilungskomponente (302), wobei die Vorhersagekomponente (301) konfiguriert ist, um:

    eine Anzahl von geplanten Ressourcen innerhalb eines kurzen Zeitfensters gemäß einem Vorhersageverfahren und einer Anzahl von zuletzt geplanten Ressourcen innerhalb des kurzen Zeitfensters vorherzusagen;
    die Anzahl geplanter Ressourcen innerhalb eines langen Zeitfensters gemäß der vorhergesagten Anzahl von geplanten Ressourcen innerhalb des kurzen Zeitfensters vorherzusagen;
    eine maximale Obergrenze von Ressourcen vorherzusagen, die in der nächsten Planung entsprechend der vorhergesagten Anzahl von geplanten Ressourcen innerhalb des kurzen Zeitfensters, der vorhergesagten Anzahl von geplanten Ressourcen innerhalb des langen Zeitfensters, einer Anzahl von Ressourcen in einer vollen Bandbreite und einer Ressourcenkompensation verwendet werden können; und
    die Ressourcenzuweisungskomponente (302) konfiguriert ist, um in der nächsten Planung eine Ressourcenzuweisung gemäß einer aktuellen Verkehrsbedingung eines Evolved-Node B (eNB) und der maximalen Obergrenze der Ressourcen durchzuführen,
    wobei eine Länge des Zeitfensters und das Vorhersageverfahren durch einen Benutzer eingegeben und durch den eNB erfasst werden.

5. Vorrichtung nach Anspruch 4, wobei das Vorhersageverfahren Folgendes umfasst: ein Gleitender-Mittelwert-Verfahren und/oder ein Trendmittelwertverfahren und/oder ein Gewichteter-Mittelwert-Verfahren und/oder ein Exponentielle-Glättung-Verfahren.

6. Vorrichtung nach Anspruch 4, wobei die Vorhersagekomponente (301) ferner konfiguriert ist, um die Ressourcenkompensation gemäß der vorhergesagten Anzahl von geplanten Ressourcen innerhalb des kurzen Zeitfensters und der Anzahl von praktisch geplanten Ressourcen innerhalb einer entsprechenden Planungsperiode dynamisch zu steuern.

7. Computerspeichermedium, auf dem ein Computerprogramm gespeichert ist, wobei das Computerprogramm konfiguriert ist, um das Ressourcenplanungsverfahren nach einem der Ansprüche 1 bis 3 auszuführen.

**Revendications**

1. Procédé d'ordonnancement de ressources, comprenant :

    la prédiction (201), par un noeud B évolué (eNB), d'un nombre de ressources ordonnancées dans une fenêtre temporelle courte conformément à un procédé de prédiction et d'un nombre de ressources ordonnancées le plus récemment dans la fenêtre temporelle courte ;
    la prédiction, par l'eNB, du nombre de ressources ordonnancées dans une fenêtre temporelle longue en fonction du nombre prédit de ressources ordonnancées dans une fenêtre temporelle courte ;

la prédiction, par l'eNB, d'une limite supérieure maximale de ressources pouvant être utilisées lors du prochain ordonnancées en fonction du nombre prédit de ressources ordonnancées dans la fenêtre temporelle courte, du nombre prédit de ressources ordonnancées dans la fenêtre temporelle longue, d'un nombre de ressources dans une bande passante complète et d'une compensation de ressources et

la réalisation (202), lors du prochain ordonnancement, de l'attribution de ressources en fonction d'une condition de trafic actuelle de l'eNB et de la limite supérieure maximale des ressources,

dans lequel une longueur de la fenêtre temporelle et le procédé de prédiction sont entrés par un utilisateur et sont acquis par l'eNB.

2. Procédé selon la revendication 1, dans lequel le procédé de prédiction comprend : un procédé à moyenne mobile et/ou un procédé à moyenne tendancielle et/ou un procédé à moyenne pondérée et/ou un procédé de lissage exponentiel.

3. Procédé selon la revendication 1, dans lequel la compensation de ressources est régulée dynamiquement en fonction du nombre prédit de ressources ordonnancées dans la fenêtre temporelle courte et du nombre de ressources pratiquement ordonnancées au cours d'une période d'ordonnancement correspondante.

4. Dispositif d'ordonnancement de ressources comprenant : un composant de prédiction (301) et un composant d'attribution de ressources (302), dans lequel

le composant de prédiction (301) est configuré pour :

prédire un nombre de ressources ordonnancées dans une fenêtre temporelle courte selon un procédé de prédiction et un nombre de ressources ordonnancées le plus récemment dans la fenêtre temporelle courte ;

prédire le nombre de ressources ordonnancées dans une fenêtre temporelle longue en fonction du nombre prédit de ressources ordonnancées dans la fenêtre temporelle courte ;

prédire une limite supérieure maximale de ressources pouvant être utilisées dans le prochain ordonnancement en fonction du nombre prédit de ressources ordonnancées dans la fenêtre temporelle courte, du nombre prédit de ressources ordonnancées dans la fenêtre temporelle longue, d'un nombre de ressources dans une bande passante complète et d'une compensation de ressources ; et

le composant d'attribution de ressources (302) est configuré pour réaliser, lors du prochain ordonnancement, une attribution de ressources en fonction d'une condition de trafic actuelle d'un noeud B évolué (eNB) et de la limite supérieure maximale des ressources,

dans lequel une longueur de la fenêtre temporelle et le procédé de prédiction sont entrés par un utilisateur et sont acquis par l'eNB.

5. Dispositif selon la revendication 4, dans lequel le procédé de prédiction comprend : un procédé à moyenne mobile et/ou un procédé à moyenne tendancielle et/ou un procédé à moyenne pondérée et/ou un procédé de lissage exponentiel.

6. Dispositif selon la revendication 4, dans lequel le composant de prédiction (301) est en outre configuré pour réguler de manière dynamique la compensation de ressources en fonction du nombre prédit de ressources ordonnancées dans la fenêtre temporelle courte et du nombre de ressources pratiquement ordonnancées au cours d'une période d'ordonnancement correspondante.

7. Support de mémoire d'ordinateur, dans lequel est mémorisé un programme informatique, le programme informatique étant configuré pour exécuter le procédé d'ordonnancement de ressources selon l'une quelconque des revendications 1 à 3.

**Fig. 1**

201. An eNB predicts a maximum upper limit of resources which are able to be used in next scheduling according to the number of historically scheduled resources

202. The eNB performs resource allocation in the next scheduling according to a current traffic condition of the eNB and the maximum upper limit of the resources

**Fig. 2**

eNB scheduler

Prediction component 301

Resource allocation component 302

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012045517 A1